# EUROPÄISCHE PATENTSCHRIFT

(11) **EP 4 056 752 B1**
(45) Veröffentlichungstag und Bekanntmachung des Hinweises auf die Patenterteilung: **12.06.2024**
(21) Anmeldenummer: 21207776.2
(22) Anmeldetag: 11.11.2021
(51) Int. Cl.: D06F 95/00, D06F 67/04, D06F 89/00, D06F 93/00

(54) **VERFAHREN ZUR BEHANDLUNG VON WÄSCHESTÜCKEN**
METHOD FOR TREATING LAUNDRY ITEMS
PROCÉDÉ DE TRAITEMENT DU LINGE

(30) Priorität: 11.03.2021 DE 102021105998; 23.03.2021 DE 102021107266; 11.06.2021 DE 102021115161
(43) Veröffentlichungstag der Anmeldung: 14.09.2022
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE)
(74) Vertreter: Meissner Bolte Partnerschaft mbB

(56) Entgegenhaltungen:
- EP-A1- 0 982 428
- GB-A- 2 337 254
- US-A1- 2020 125 905

## Beschreibung

Die Erfindung betrifft ein Verfahren zur Behandlung von Wäschestücken gemäß dem Oberbegriff des Anspruchs 1.

In Wäschereien werden üblicherweise unterschiedlichste Wäschestücke angeliefert. Es kann sich hierbei um zu mangelnde Flachwäsche wie Bettwäsche und Tischwäsche, nicht zu mangelnde Wäsche, zum Beispiel Frotteewäsche, oder auch Sonderartikel, beispielsweise Arbeitsbekleidung handeln.

Bisher ist es so, dass die unterschiedlichsten Arten von Wäschestücken nach der Anlieferung sortiert werden. Weil allein Bettwäsche, aber auch Tischwäsche, verschiedene Arten und Größen von Wäschestücken umfasst, erfordert die Sortierung einen großen apparativen und auch personellen Aufwand. Vor allem der personelle Aufwand ist hoch, weil das Sortieren der zu behandelnden Wäschestücke noch überwiegend händisch erfolgt. Die von Bedienungspersonen erfolgende Sortierung ist häufig auch fehlerbehaftet, wodurch Wäschestücke eine falsche Behandlung erfahren, was in ungünstigen Fällen zu Schädigungen falsch behandelter Wäschestücke führt.

Die sortierten Wäschestücke müssen außerdem postenweise in beispielsweise sogenannten Sackförderanlagen zwischengespeichert werden, bis sie behandelt werden, also "an der Reihe" sind.

Die EP 0 982 428 A1 betrifft ein Verfahren und eine Vorrichtung zum Zuführen von Wäschestücken zu einer Eingabeeinrichtung. Die Eingabeeinrichtung breitet ein jeweiliges Wäschestück aus und gibt es im ausgebreiteten Zustand in die nachfolgende Mangel ein. Vor der Eingabeeinrichtung befinden sich ein Speicher für eine Vielzahl von Wäschestücken und mehrere am Anfang des Speichers angeordnete Beladestationen. An den Beladestationen werden manuell Wäschestücke mit gegenüberliegenden Ecken einer Kante in Transportklammern eingehängt. Die jeweilige Beladestation weist eine Messstation auf zur Ermittlung der Länge des an gegenüberliegenden Ecken von den Transportklammern gehaltenen Randes des jeweiligen Wäschestücks. Wie die Wäschestücke nach dem Mangeln weiter behandelt werden, ist im genannten Dokument nicht erwähnt.

Die GB 2 337 254 A offenbart ein Verfahren und ein System zum Behandeln von Wäschestücken. Auf einen Wasch- und Trockenbereich folgt eine Pack- und Sortierstation. An der Packstation erfolgt manuell eine Inspektion der behandelten Wäschestücke sowie das Falten und Verpacken derselben. Die verpackten Wäschestücke werden anschließend ebenfalls manuell registriert und vor der Auslieferung nach Kunden sortiert. Dieses bekannte System erfordert mehrfache manuelle Tätigkeiten.

Der Erfindung liegt die Aufgabe zugrunde, ein Verfahren zur Behandlung von Wäschestücken zu schaffen, das den apparativen und personellen Aufwand in einer Wäscherei verringert, den Platzbedarf reduziert und vorzugsweise mindestens größtenteils automatisierbar ist.

Ein Verfahren zur Lösung der Aufgabe weist die Maßnahmen des Anspruchs 1 auf. Bei diesem Verfahren ist es vorgesehen, solche Wäschestücke, die gemangelt werden müssen, unsortiert zu behandeln, vorzugsweise mindestens zu waschen, zu trocknen, zu mangeln und zu falten. Wenn somit der Wäscherei nur zu mangelnde Wäschestücke angeliefert werden, brauchen diese vor der ersten Behandlung überhaupt nicht sortiert zu werden. Falls zusammen mit den zu mangelnden Wäschestücken auch nicht zu mangelnde Wäschestücke, wie beispielsweise Frotteewäschestücke, angeliefert werden, braucht nur eine Aussortierung nicht zu mangelnder Wäschestücke, beispielsweise Frotteewäsche, vor der Behandlung zu erfolgen. Das ist ein einfacher Sortiervorgang, der wenig Personal benötigt und gegebenenfalls auch automatisch durchführbar ist.

Das Verfahren sieht es vor, erst vor dem Falten oder gegebenenfalls auch schon vor dem Mangeln eine Identifikation jedes einzelnen Wäschestücks vorzunehmen. Vorzugsweise werden dabei zum Beispiel die Art, die Größe, die Farbe, Art des Gewebes, das Falt- und Abstapelkriterium und/oder der Empfänger bzw. Kunde des jeweiligen Wäschestücks, vor allem des jeweiligen zu mangelnden Wäschestücks, ermittelt, vorzugsweise berührungslos. Einzelne ausgewählte oder gegebenenfalls auch alle genannten Ermittlungen bzw. Kriterien ersetzen mindestens einen Großteil des vor der Behandlung erfolgenden Sortierens und erfolgen vorzugsweise automatisch. Auch ist es denkbar, vor verschiedenen Behandlungen jeweils andere Kriterien zu ermitteln.

Das Verfahren ist so ausgebildet, dass die Wäschestücke identifiziert und einzelne bzw. ausgewählte, aber gegebenen auch alle Merkmale und/oder nachfolgende Behandlungskriterien derselben ermittelt werden durch berührungsloses Auslesen von Datenträgern, die den Wäschestücken zugeordnet sind, insbesondere an denselben angebracht sind und/oder berührungslose Ermittlung durch mindestens eine bildgebende Einrichtung. Durch die mindestens eine bildgebende Einrichtung, insbesondere Kamera, Laser oder dergleichen, lassen sich schnell und zuverlässig automatisch insbesondere die Art, die Größe, die Farbe, Muster, Gewebestrukturen und/oder Behandlungsparameter bzw. - kriterien jedes einzelnen Wäschestücks rasch automatisch und vor allem auch zuverlässig ermitteln.

Es ist vorgesehen, spätestens vor dem mindestens einen Stapler alle Wäschestücke berührungslos zu identifizieren, damit sie gezielt ihrer Art nach gefaltet und sortiert abgestapelt werden können. Vor dem mindestens einen Stapler werdeb das Falt- und das Abstapelkriterium und/oder der Empfänger jedes einzelnen unsortiert zu faltenden Wäschestücks ermittelt. Das kann beispielsweise mit mindestens einer bildgebenden Einrichtung erfolgen. Aufgrund der so erfolgten Identifikation der unterschiedlichen Wäschestücke werden die unterschiedlichen Wäschestücke ihrer Art nach sortenrein und insbesondere auch sortiert nach Empfänger auf jeweils einen Stapel oder mehrere gleiche Stapel abgestapelt. Es findet dadurch kurz vor dem Ende der Behandlung, vorzugsweise erst beim letzten Behandlungsschritt, der Wäschestücke die Sortierung derselben statt.

Bevorzugt ist es vorgesehen, dass nur solche zu mangelnden Wäschestücke, bei denen es sich um Flachwäschestücke handelt, insbesondere Tischwäschestücke und/oder Bettwäschestücke, unsortiert wenigstens gewaschen, getrocknet, gemangelt und vorzugsweise auch gefaltet werden. Die genannten Wäschestücke brauchen vor der Behandlung nicht sortiert zu werden.

Das Mangeln der unsortierten Wäschestücke kann bei einer bevorzugten Ausgestaltung des Verfahrens bei einer abgesehen von gewissen Schwankungen unveränderten Mangeltemperatur erfolgen. Bei der Mangeltemperatur handelt es sich um eine verringerte Mangeltemperatur, die die empfindlichsten zu mangelnden Wäschestücke nicht beeinträchtigt. Außerdem ist es beim Mangeln sortierter Wäschestücke denkbar, dass der Plättweg und/oder die Mangelgeschwindigkeit derart gewählt werden, vorzugsweise unverändert bleiben, dass auch schwer zu mangelnde und/oder unempfindliche Wäschestücke, beispielsweise schwere bzw. doppellagige Wäschestücke, beim Mangeln ausreichend endgetrocknet werden. Durch jede oder gegebenenfalls eine vorgenannte Vorgehensweise ist es möglich, bei vorzugsweise unveränderter Einstellung der Mangelparameter unterschiedliche Wäschestücke nacheinander und in beliebiger Reihenfolge unsortiert so zu mangeln, dass empfindliche Wäschestücke nicht beeinträchtigt werden, aber unempfindlichere Wäschestücke beim Mangeln ausreichend endgetrocknet werden.

Bei einer anderen, vorteilhaften Weiterbildungsmöglichkeit des Verfahrens ist es vorgesehen, die Wäschestücke nach dem Falten zu sortieren. Bevorzugt erfolgt das Sortieren beim oder vor dem Abstapeln gefalteter Wäschestücke.

Das Sortieren erfolgt anhand entsprechender Kriterien, vorzugsweise Sortierkriterien, die vorher, bevorzugt vor dem Falten, aber alternativ auch schon vor dem Mangeln, vorzugsweise automatisiert ermittelt werden. Sortierkriterien können Art, Abmessung und/oder Empfänger bzw. Kunde der behandelten Wäschestücke sein.

Die vorgenannten Maßnahmen tragen jeweils für sich allein, aber auch in Kombination mehrerer Maßnahmen, zur Vereinfachung und Automation der Behandlung, insbesondere der Sortierung, der Wäschestücke bei.

Gemäß einer vorteilhaften Weiterbildung des Verfahrens ist es vorgesehen, anhand der vor dem Mangeln oder spätestens vor dem Falten erfolgten Ermittlung der Faltkriterien und/oder Abstapelkriterien das jeweilige Wäschestück individuell und gezielt zu falten und jedes gefaltete Wäschestück gezielt nach ihrem jeweiligen Abstapelkriterium oder mehreren Abstapelkriterien, wie und Art und Kunde bzw. Empfänger, auf mindestens einem Stapel mit Wäschestücken gleichen Abstapelkriteriums abzustapeln. Hierdurch erfolgt nach dem unsortierten oder gegebenenfalls vorsortierten Behandeln der Wäschestücke eine Sortierung derselben, so dass die behandelten und gefalteten Wäschestücke gezielt auf Stapeln gleicher oder zumindest gleichartiger Wäschestücke gleicher Kunden und/oder Empfänger abstapelbar sind.

Bei dem Verfahren kann es vorgesehen sein, die Wäschestücke vor dem Waschen nur danach zu sortieren, ob sie gemangelt oder nicht gemangelt werden müssen. Eine solche Sortierung ist einfach möglich, weil nur nicht zu mangelnde Wäschestücke, wie sogenannte Trockenwäsche, beispielsweise Frotteewäschestücke, von den übrigen zu mangelnden Wäschestücken wie Flachwäschestücke getrennt werden müssen. Gegebenenfalls kann die Sortierung auch nach sogenannten Sonderteilen, die nicht mit übrigen Wäschestücken zusammen behandelt werden können, erfolgen. Auch ist es denkbar, bestimmte zu mangelnde Wäschestücke bei der Vorsortierung von anderen zu mangelnden Wäschestücken zu trennen. Beispielsweise können Tischwäschestücke von Bettwäschestücken getrennt werden, so dass nur sämtliche Bettwäschestücke wie Bettbezüge, Bettlaken und Kopfkissen unsortiert behandelt werden und umgekehrt. Selbst im letztgenannte Fall tritt eine deutliche Verringerung des Sortieraufwands ein, weil sich ein Sortieren der Bettwäsche nach Bettbezügen, Bettlaken und Kopfkissenbezügen erübrigt.

Falls nur zu mangelnde Wäschestücke, insbesondere nur Bett- und/oder Tischwäschestücke, in der Wäscherei angeliefert werden, kann eine Sortierung derselben vor der Behandlung völlig entfallen, weil die Behandlung zu mangelnder Wäschestücke unsortiert in beliebiger Reihenfolge erfolgt. Die Sortierung erfolgt damit erst nach dem Falten der Wäschestücke, also bei vollständig behandelten Wäschestücken. Diese werden dann sortenrein und vorzugsweise auch nach Kunden und/oder Empfänger sortiert auf einen Stapel automatisch abgestapelt, indem jeder Stapel nur Wäschestücke für einen gleichen Empfänger enthält. Dazu ist hinter der oder der jeweiligen Faltmaschine eine so große Anzahl von Staplern vorgesehen, die der Anzahl der Stapelkriterien entspricht, beispielsweise bei Bettwäsche mindestens ein Stapler für Bettbezüge, mindestens ein anderer Stapler für Bettlaken und wiederum mindestens ein anderer Stapler für Kopfkissenbezüge.

Eine andere Ausgestaltungsmöglichkeit des Verfahrens ist darauf gerichtet, vor dem Falten unterschiedlich zu mangelnde Wäschestücke mit nicht zu mangelnden getrockneten Wäschestücken zusammenzuführen, und zwar vorzugsweise auch in beliebiger Reihenfolge. Dann können auch diese Wäschestücke zusammen mit den gemangelten Wäschestücken gemeinsam gefaltet werden, vorzugsweise auf derselben Faltmaschine oder verschiedenen Faltmaschinen. Nach dem Falten werden die Wäschestücke sortenrein gestapelt und dabei gleichzeitig sortiert, so dass Stapel gleicher oder gleichartiger Wäschestücke vorzugsweise auch kundengebunden gebildet werden.

Vorteilhafterweise sind der gleichen Faltmaschine mehrere Abstapler oder jeder von mehreren Faltmaschinen eine Gruppe von benötigten Abstaplern zugeordnet, vorzugsweise in Bezug auf die Abgaberichtung gefalteter Wäschestücke von der Faltmaschine dieser nachgeordnet. Dabei können alle oder zumindest einige Abstapler unter, hinter und/oder neben der jeweiligen Faltmaschine vorgesehen sein. Es ist mindestens für jedes zu erwartende Stapelkriterium ein Abstapler vorgesehen. Es ist aber auch denkbar, mehrere Abstapler für dieselben Stapelkriterien vorzusehen.

Falls eine mindestens teilweise Identifikation, insbesondere Vermessung, der zu mangelnden Wäschestücke schon vor der Mangel vorgesehen ist, geschieht dies vorteilhafterweise vor oder an einer die Wäschestücke ausbreitenden und ausgebreitet der Mangel zuführenden Eingabemaschine. Beim Vermessen wird mindestens die Länge eines vorderen quer zur Behandlungsrichtung verlaufenden Rands des jeweiligen Wäschestücks ermittelt, und zwar vorzugsweise vor dem Ausbreiten des Wäschestücks von einer Spreizeinrichtung der Eingabemaschine. Dabei hängt der vordere Rand des Wäschestücks noch durch. Vor allem bei größeren Wäschestücken ist dieser Durchhang so groß, dass sich der vordere Rand insbesondere mittels wenigstens einer bildgebenden Einrichtung nicht berührungslos ermitteln lässt. Deshalb ist es vorgesehen, benachbarte Ecken des vorderen Rands in einem Klammerpaar zu halten, dessen Abstand so groß ist, dass sich auch bei größeren Wäschestücken ein definierter, insbesondere V-artiger oder U-artiger Durchhang des vorderen Rands einstellt, der vor allem von einer bildgebenden Einrichtung vermessen werden kann, insbesondere hinsichtlich der maximalen Tiefe des Durchhangs. Die vor dem Ausbreiten des Wäschestücks erfolgende Vermessung des vorderen Rands, insbesondere Querrands, desselben, ist besonders vorteilhaft bei der unsortierten Zuführung unterschiedlich großer Wäschestücke zur Mangel. Dadurch kann der Spreizvorgang verkürzt werden und es ist gegebenenfalls auch eine optimale Belegung der Mangel durchführbar.

Ein bevorzugtes Ausführungsbeispiel der Erfindung wird nachfolgend anhand der Zeichnung näher erläutert. In dieser zeigen:
- Fig. 1: eine schematische Seitenansicht einer Behandlungsstraße für Wäschestücke,
- Fig. 2: eine schematische Draufsicht auf eine Faltmaschine mit einer Mehrzahl dieser nachgeordneten Abstapler, und
- Fig. 3: eine perspektivische Ansicht eines anderen Ausführungsbeispiels der Zuordnung der Abstapler zur Faltmaschine.

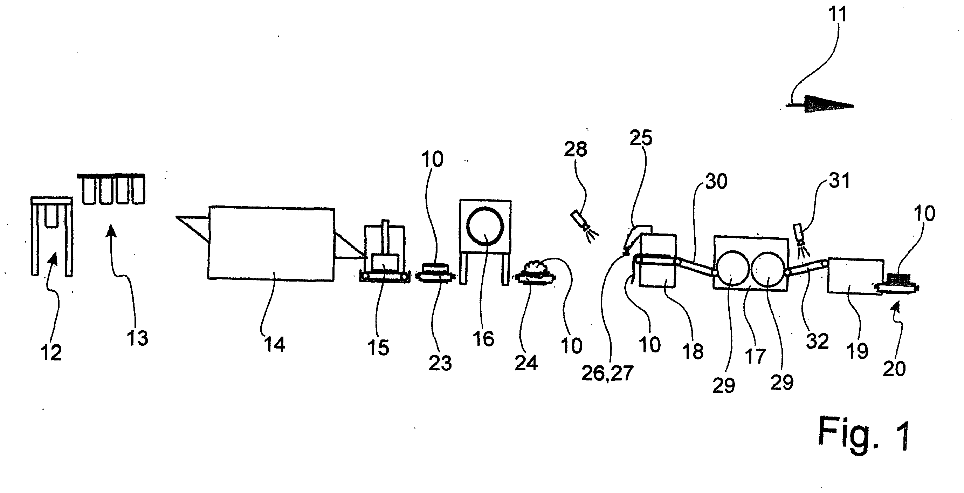

Die Fig. 1 zeigt eine mögliche Behandlungsstraße zur Durchführung des erfindungsgemäßen Verfahrens. Die Behandlungsstraße dient zur Behandlung von sogenannter Mangelware. Dabei handelt es sich vorrangig um sogenannte Flachwäsche wie Bettwäsche und Tischwäsche. In der Fig. 1 sind nur zum Teil Wäschestücke 10 andeutungsweise dargestellt.

Die Behandlungsstraße verfügt in Behandlungsrichtung 11 aufeinanderfolgend über einen Sortierstand 12, eine nur symbolisch teilweise dargestellte Sackförderanlage 13, eine Waschmaschine 14, eine Entwässerungseinrichtung 15, mindestens einen Trockner 16, wenigstens eine Mangel 17, der eine Eingabemaschine 18 vorgeordnet ist, mindestens eine Faltmaschine 19 und einen Sortierstapler 20 mit einer Mehrzahl vorzugsweise gleicher Abstapler 21 für jeweils gleich gefaltete Wäschestücke 10. Die Wäschestücke 10 durchlaufen die Behandlungsstraße in Behandlungsrichtung 11.

Beim Sortierstand 12 handelt es sich um einen vereinfachten Sortierstand 12, an dem nur eine Vorsortierung der Wäschestücke 10 nach wenigen Sortierkriterien erfolgt. Denkbar ist auch eine gegenüber der Darstellung in der Fig. 1 vereinfachte Behandlungsstraße, die an ihrem Anfang über keinen Sortierstand 12 verfügt, wenn nur solche Wäschestücke 10 angeliefert werden, die nach dem Waschen und Trocknen auch gemangelt werden müssen. Wenn nur zu mangelnde Wäschestücke 10 angeliefert werden, kann gegebenenfalls gleichwohl ein Sortierstand 12 vorhanden sein, wenn die Wäschestücke 10 getrennt nach Tischwäsche und Bettwäsche gemangelt werden müssen. Dann sind am Sortierstand 12 nur Tischwäschestücke von Bettwäschestücken zu trennen oder umgekehrt.

In Behandlungsrichtung 11 folgt auf den Sortierstand 12 ein Speicher, der beispielsweise als eine sogenannte Sackförderanlage ausgebildet ist. In jedem Sack der Sackförderanlage befindet sich ein Posten Wäschestücke 10. Im Speicher befindet sich stets ein ausreichender Vorrat an Wäscheposten, wodurch ein kontinuierliches Waschen der Wäschestücke 10 gewährleistet ist.

Auf den Speicher folgt die Waschmaschine 14. Bei der in der Fig. 1 schematisch dargestellten Waschmaschine 14 handelt es sich um eine Durchlaufwaschmaschine mit einer um eine mittlere horizontale Drehachse drehbaren länglichen zylindrischen Trommel, worin mehrere aufeinanderfolgende Kammern zur Aufnahme jeweils eines Wäschepostens angeordnet sind. Die die Waschmaschine 14 verlassenden gewaschenen Wäschestücke 10 gelangen postenweise in die in Behandlungsrichtung 11 gesehen hinter der Waschmaschine 14 angeordnete Entwässerungseinrichtung 15. In der Fig. 1 ist schematisch eine als Entwässerungspresse ausgebildete Entwässerungseinrichtung 15 gezeigt. Bei der Entwässerungseinrichtung kann es sich auch um eine Wäschezentrifuge oder dergleichen handeln.

Hinter der Entwässerungseinrichtung 15 ist ein Verteilförderer 23 für gewaschene und entwässerte Wäschestücke 10, insbesondere Wäscheposten, angeordnet. Dem Verteilförderer 23 sind mehrere in Reihe nebeneinander angeordnete, vorzugsweise gleiche Trockner 16 zugeordnet, vorzugsweise nach- oder nebengeordnet. Vom Verteilförderer 23 sind die Wäscheposten quer zur Behandlungsrichtung 11 zum jeweiligen freien Trockner 16 transportierbar und gegebenenfalls mit zu trocknenden Wäschestücken 10 beladbar.

In Behandlungsrichtung 11 hinter der Reihe nebeneinanderliegender Trockner 16 ist ein Sammelförderer 24 angeordnet, der die Wäschestücke 10 postenweise an eine Stelle fährt, von wo aus die Eingabemaschine 18 mit jeweils einem einzelnen Wäschestück 10 beschickbar ist. Das kann manuell durch eine oder mehrere Bedienungspersonen oder auch automatisch durch mindestens eine Handhabungseinrichtung geschehen. Diese sind in der Fig. 1 nicht gezeigt. Auch ist es denkbar, zwischen dem Sammelförderer 24 und der Eingabemaschine 18 einen Wäschespeicher vorzusehen, der in der Fig. 1 ebenfalls nicht dargestellt ist.

Bei einer Behandlungsstraße mit nur einem einzigen Trockner 16 können der Verteilförderer 23 und/oder der Sammelförderer 24 entfallen.

Bei der Eingabemaschine 18 kann es sich um eine solche handeln, die an der Vorderseite mehrere nebeneinanderliegende Beladestationen aufweist. Jeder Beladestation 25 ist ein Beladeklammerpaar 26 mit zwei quer zur Behandlungsrichtung 11 beabstandeten, vorzugsweise gleichen Beladeklammern 27 zugeordnet. Die Beladeklammern 27 können zu einer Doppelklammer zusammengefasst sein, die dann das Beladeklammerpaar 26 bildet. Jede der beiden Beladeklammern 27 hält eine von benachbarten Ecken eines vorderen quer zur Behandlungsrichtung 11 verlaufenden Rands, insbesondere Querrands, des jeweiligen Wäschestücks 10.

Der Abstand der beiden Beladeklammern 27 des Beladeklammerpaars 26 bzw. der Doppelklammer ist größer als üblich, nämlich so groß, dass sich zwischen beiden von den Beladeklammern 27 beabstandet gehaltenen Ecken ein definierter, erkennbarer V-artige oder U-artiger Durchhang des vorderen Rands des jeweiligen Wäschestücks 10 bildet. Bei der in der Fig. 1 dargestellten Behandlungsstraße ist vor der jeweiligen Beladestation 25 eine beispielsweise als Kamera, insbesondere Digitalkamera, ausgebildete bildgebende Einrichtung 28 oder auch eine Sensorleiste, ein Laserfächer oder dergleichen vorgesehen. Diese bilden den V-artigen bzw. U-artigen Durchhang des vorderen Rands des an den Beladeklammern 27 hängenden Wäschestücks 10 ab oder ermitteln ihn.

Es ist eine alternative Behandlungsstraße denkbar, bei der vor der Eingabemaschine 18 keine bildgebende Einrichtung 28 vorgesehen ist.

Die Eingabemaschine 18 verfügt in Behandlungsrichtung 11 hinter den Beladestationen und den Beladeklammerpaaren 26 über eine Spreizeinrichtung mit mindestens einem quer zur Behandlungsrichtung 11 zusammen- und auseinanderfahrbaren Spreizklammerpaar. Die Spreizeinrichtung und das Spreizklammerpaar sind in der Fig. 1 nicht dargestellt. Von dem Beladeklammerpaar 26 sind die gegenüberliegenden Ecken des vorderen Rands des jeweiligen Wäschestücks 10 an das Spreizklammerpaar übergebbar bzw. es sind die benachbarten Ecken des vorderen Rands des Wäschestücks 10 von den Spreizklammern des Spreizklammerpaars aus den Beladeklammern 27 des jeweiligen Beladeklammerpaars 26 übernehmbar. Ein vom Spreizklammerpaar ausgestrecktes Wäschestück 10 ist mit voraneilendem gestreckten vorderen Rand auf einem Förderer 30 der Eingabemaschine 18 bzw. der Mangel 17 ablegbar, der das Wäschestück 10 im ausgebreiteten und/oder gestreckten Zustand in die nachfolgende Mangel 17 eingibt.

Die Mangel 17 ist bei der in der Fig. 1 gezeigten Mangelstraße als Muldenmangel ausgebildet. Diese verfügt über zwei aufeinanderfolgende Mangelwalzen 29, denen jeweils eine Mangelmulde zugeordnet ist. Die Mangel 17 kann aber auch mehr als zwei aufeinanderfolgende Mangelwalzen 29 und Mangelmulden aufweisen oder nur über eine einzige Mangelwalze 29 und Mangelmulden verfügen. Auch ist eine Mangel 17 denkbar, die als Bändermangel ausgebildet ist mit einem oder auch mehreren Mangelkörpern, die teilweise von jeweils einem Mangelband umschlungen sind. Gemangelte Wäschestücke 10 verlassen die Mangel 17 über einen Förderer 32, der die gemangelten und noch ausgebreiteten Wäschestücke 10 zur Faltmaschine 19 transportiert und in diese eingibt.

Oberhalb des Förderers 32 vor der mindestens einen Faltmaschine 19 oder derselben ist mindestens eine bildgebende Einrichtung 31 angeordnet. Dabei handelt es sich bevorzugt um mindestens eine Kamera, und zwar insbesondere eine digitale Farbkamera. Zusätzlich oder alternativ zur bildgebenden Einrichtung 31 kann dem Förderer 30 auch ein nicht gezeigter Scanner zugeordnet sein.

Die bildgebende Einrichtung 31 ist so ausgebildet, dass sie jedes einzelne Wäschestück 10 identifiziert, und zwar vorzugsweise die Größe, insbesondere Breite und Länge, Art, Farbe, Gewebestruktur und/oder Falt- und Abstapel- bzw. Sortierkriterien sowie gegebenenfalls den Kunden, der das behandelte Wäschestück 10 erhalten soll.

Der Scanner erfasst einen Datenträger im oder am Wäschestück 10, der Daten zur Identifikation des Wäschestücks 10 enthält, insbesondere solche Daten, die Informationen zu den vorstehend genannten Kriterien enthält, die alternativ oder zusätzlich von der mindestens einen bildgebenden Einrichtung 31 aufgenommen werden. Es reicht ein Scanner statt einer bildgebenden Einrichtung 31 vor der Faltmaschine 19, falls davon auszugehen ist, dass jedes Wäschestück 10 mit einem Datenträger, beispielsweise einem RFID-Chip, versehen ist. Falls Wäschestücke 10 zu behandeln sind, die über keinen Datenträger verfügen, braucht vor der Faltmaschine 19 nur mindestens eine bildgebende Einrichtung 28 vorhanden zu sein. Denkbar ist es aber auch, dass vor der Eingabemaschine 18 alternativ oder zusätzlich mindestens eine bildgebende Einrichtung 28 und/oder ein Scanner vorhanden sind, die schon vor dem Mangeln die nicht nur zum Mangeln, sondern auch zum späteren Falten und sortenreinen Abstapeln des jeweiligen Wäschestücks 10 erforderlichen Daten und Kriterien durch entsprechende Identifikation des Wäschestücks 10 erfassen. Dann brauchen vor der Faltmaschine 19 keine bildgebende Einrichtung 31 und auch kein Scanner vorhanden zu sein.

Die Faltmaschine 19 ist so ausgebildet, dass sie Wäschestücke unterschiedlicher Art, Größe und Format in der gewünschten Weise automatisch faltet. Das Falten erfolgt in Abhängigkeit von Faltkriterien, die zu jedem Wäschestück 10 individuell vor der Faltmaschine 19, und zwar entweder direkt vor derselben oder schon vor der Eingabemaschine 18 der Mangel 17 berührungslos von der bildgebenden Einrichtung 28 und/oder 31 und alternativ oder zusätzlich mindestens einem Scanner erfasst worden sind.

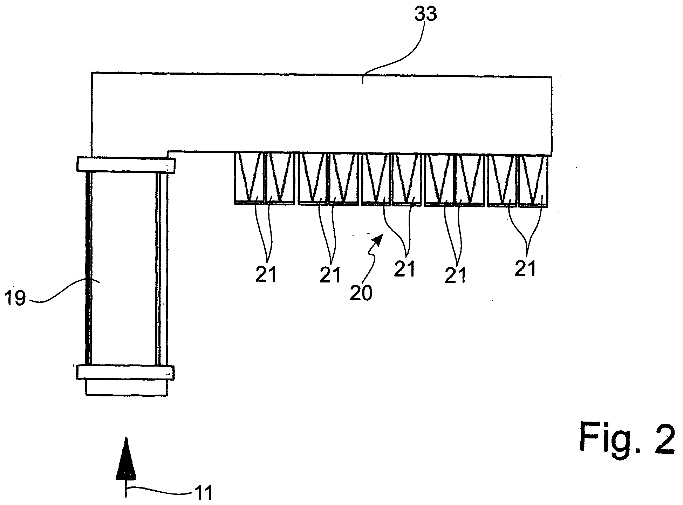

Die Fig. 2 zeigt in Draufsicht die Faltmaschine 19 mit der darauf in Behandlungsrichtung 11 folgenden Sortierstation, insbesondere wenigstens einem Sortierstapler 20. Der Sortierstapler 20 verfügt über eine Reihe mehrerer nebeneinander angeordnete, vorzugsweise gleiche Abstapler 21, die in Behandlungsrichtung 11 gesehen auf die Faltmaschine 19 folgen, indem sie hinter und gegebenenfalls unter der Faltmaschine 19 angeordnet sind. Im in der Fig. 2 gezeigten Ausführungsbeispiel verfügt der Sortierstapler 20 über zehn nebeneinander angeordnete und vorzugsweise gleiche Abstapler 21. Damit können Wäschestücke 10, die über bis zu zehn verschiedene Sortier- bzw. Stapelkriterien verfügen, sortenrein und sortiert, vorzugsweise auch nach Empfängern sortiert, abgestapelt werden, indem jeder Abstapler 21 einen Stapel gefalteter Wäschestücke 10 gleicher Sortierkriterien aufnimmt. Die Erfindung ist nicht auf die in der Fig. 2 dargestellten zehn Abstapel 21 beschränkt. Je nach Anzahl der Stapel- bzw. Sortierkriterien der in der Behandlungsstraße behandelten Wäschestücke 10 kann eine größere oder kleinere Anzahl von Abstaplern 21 vorgesehen sein. Denkbar ist es auch, dass insbesondere bei relativ wenigen Sortierkriterien der Sortierstapler 20 über mehrere Abstapler 21 gleicher Sortierkriterien oder zumindest bestimmter Sortierkriterien, in das häufig vorkommende Wäschestücke 10 fallen, verfügt. Der Sortierstapler 20 und/oder seine Abstapler 21 werden anhand der vorher zu jedem einzelnen Wäschestück 10 bei der Identifikation desselben erfassten Sortierkriterien gesteuert.

Die die Faltmaschine 19 verlassenden gestapelten Wäschestücke 10 werden von einem Förderer 33 zu den Abstaplern 21 des Sortierstaplers 20 transportiert. Dabei wird der Förderer 33 so gesteuert, dass ein jeweils gefaltetes Wäschestück 10 zu demjenigen Abstapler 21 gelangt, wo es aufgrund seines zuvor ermittelten Sortierkriteriums bzw. Abstapelkriteriums vom Förderer 33 dem betreffenden Abstapler 21 zugeführt werden soll.

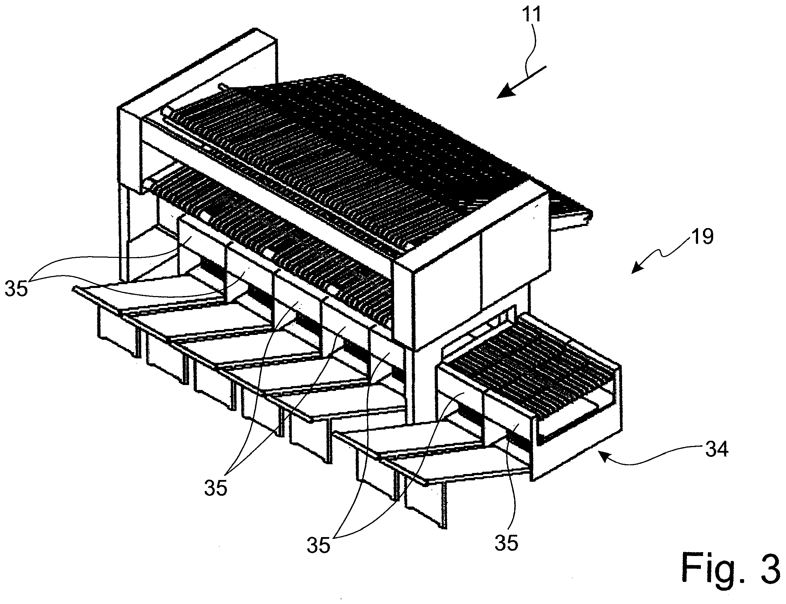

Die Fig. 3 zeigt eine räumliche Darstellung (Perspektive) einer Faltmaschine 19, der ein Sortierstapler 34 auf andere Weise zugeordnet ist als im Ausführungsbeispiel der Fig. 2. Auch dieser Sortierstapler 34 verfügt über eine Reihe nebeneinander angeordneter, vorzugsweise gleicher Abstapler 35. In der Fig. 3 ist eine Reihe mit sieben Abstapler 35 gezeigt, ohne dass die Erfindung hierauf beschränkt sein soll.

Der Sortierstapler 34 mit der Reihe mehrerer Abstapler 35 ist in diesem Ausführungsbeispiel unterhalb der Faltmaschine 19 angeordnet. Das geschieht so, dass die Reihe nebeneinanderliegender Abstapler 35 quer zur Behandlungsrichtung 11 und/oder zur Faltmaschine 19 verläuft. Der Sortierstapler 34 der Fig. 3 verfügt über eine solche Anzahl von Abstaplern 35, die zusammen in einer quer zur Behandlungsrichtung 11 angeordneten Reihe die Breite der Faltmaschine 19 übersteigt. Deswegen sind in diesem Ausführungsbeispiel zwei Abstapler 35 nicht nur unterhalb, sondern auch seitlich neben der Faltmaschine 19 angeordnet. Es ist auch, insbesondere bei einer größeren Anzahl von Abstaplern 35, denkbar, auf beiden gegenüberliegenden Seiten der Faltmaschine 19 jeweils mindestens einen Abstapler 35 unter der Faltmaschine 19 vorzusehen. Sofern der Faltmaschine 19 nur eine Reihe mit einer solchen Anzahl von Abstaplern 35 zugeordnet ist, die sich allesamt unter der Faltmaschine 19 unterbringen lassen, befindet sich der gesamte Sortierstapler 34 mit allen Abstaplern 35 unterhalb der Faltmaschine 19. Der Sortierstapler 34 und der Abstapler 35 sind auch so ausgebildet, dass in jedem Abstapler 35 Wäschestücke gleicher Sorte abstapelbar sind.

Nachfolgend wird das erfindungsgemäße Verfahren unter Bezugnahme auf die zuvor beschriebene Behandlungsstraße und in die in den Fig. 2 sowie 3 dargestellten Faltmaschinen 19 mit den diesen zugeordneten Sortierstaplern 20 und 34 erläutert:
Das Verfahren zeichnet sich dadurch aus, dass vor allem zu mangelnde Wäschestücke 10 unsortiert behandelt werden. Das unsortierte Behandeln der Wäschestücke 10 erstreckt sich zumindest auf das Waschen, das Trocknen, das Mangeln und das Falten.

Das Sortieren dieser Wäschestücke 10 erfolgt erfindungsgemäß erst beim Abstapeln der behandelten und gestapelten Wäschestücke 10.

Bei der Vorrichtung der Fig. 1 ist am Anfang der Behandlungsstraße ein Sortierstand 12 vorgesehen. Hier findet aber nur eine vereinfachte Sortierung statt, indem beispielsweise von dem zu mangelnden Wäschestück 10 nicht zu mangelnde Wäschestücke, beispielsweise sogenannte Trockenwäsche, wobei es sich überwiegend um Frotteewäsche handelt, aussortiert werden. Gegebenenfalls können auch Sonderartikel, beispielsweise Berufsbekleidungsstücke, von den zu mangelnden Wäschestücken am Sortierstand 12 getrennt werden. Auch ist es denkbar, zu mangelnde Tischwäsche von der zu mangelnden Bettwäsche zu trennen. In diesem Falle werden in der Behandlungsstraße nur Bettbezüge, Bettlaken und Kopfkissenbezüge unsortiert behandelt. Ebenso oder alternativ kann auch Tischwäsche, wie Tischdecken, Servietten, Platzdecken oder dergleichen unsortiert in der Behandlungsstraße behandelt werden. Falls in der Wäscherei nur zu mangelnde Wäsche angeliefert wird, also Flachwäsche, kann der Sortierstand 12 ganz entfallen, so dass dann die komplette Flachwäsche unsortiert behandelt wird, ohne dass im Bereich des Sortierstands 12 eine Vorsortierung erfolgt.

In der nachfolgenden Beschreibung wird davon ausgegangen, dass nur solche zu mangelnden Wäschestücke 10, also Flachwäschestücke, in der Behandlungsstraße unsortiert behandelt werden sollen, bei denen es sich um Bettwäsche handelt. Dann werden doppellagige Bettbezüge, einlagige größere Bettlaken und doppellagige kleinere Kopfkissenbezüge unsortiert durcheinander in der Behandlungsstraße behandelt und erst beim oder vor dem Abstapeln sortiert.

In der Waschmaschine 10 werden aus der Sackförderanlage 13 oder einer anderen Förderanlage kommende Posten der unsortierten Wäsche (hier: Bettwäsche) nach und nach chargen- bzw. postenweise gewaschen. Die gewaschene Bettwäsche wird anschließend in der Entwässerungseinrichtung 15 entwässert und danach in eine von vorzugsweise mehreren nebeneinander angeordneten Trocknern 16 getrocknet, und zwar nur so weit, dass die Endtrocknung beim Mangeln erfolgt. Der jeweilige Posten gewaschener und getrockneter Wäschestücke 10 wird anschließend vereinzelt und einzelne Wäschestücke 10 unsortiert nacheinander in beabstandete Beladeklammern 27 eines jeweiligen Beladeklammerpaars 26 der entsprechenden Beladestation 25 an der Vorderseite der Eingabemaschine 18 eingehängt. Das geschieht mit benachbarten Ecken des vorderen Rands, insbesondere des quer zur Behandlungsrichtung 11 verlaufenden Querrands.

Die Beladeklammern 27 des jeweiligen Beladeklammerpaars 26 weisen im Vergleich zu üblichen Beladeklammerpaaren 26 einen vergrößerten, und zwar etwa verdoppelten, Abstand auf. Dieser Abstand ist so gewählt, dass auch bei größeren Wäschestücken 10 sich ein deutlich erkennbarer V-artiger Durchhang des vorderen Rands des Wäschestücks 10, insbesondere des jeweiligen Bettwäschestücks, einstellt. Der aufgrund des vergrößerten Abstands der Beladeklammern 27 des Beladeklammerpaars 26 sich ausbildende V-artige Durchhang des vorderen Rands des Wäschestücks 10 ermöglicht es der bildgebenden Einrichtung 28, und zwar entweder Kamera oder eines Laserfächers bzw. Laservorhangs, den Verlauf des durchhängenden V-artigen Querrands zu erfassen und zu ermitteln. Insbesondere wird die tiefste Stelle des Durchhangs des mit benachbarten Ecken des vorderen Rands an den Beladeklammern gehaltenen Wäschestücks 10 von der bildgebenden Einrichtung 28 oder einem Laserfächer oder sonstigen Sensormitteln gemessen. Unter Einbeziehung des bekannten konstanten Abstands der Beladeklammern des Beladeklammerpaars 26 sowie des Abstands der gemessenen tiefsten Stelle von einer gedachten Verbindungslinie zwischen den Ecken des betreffenden Bettwäschestücks in den beiden Beladeklammern 27 wird die Länge bzw. Breite des vorderen Rands des Wäschestücks 10, insbesondere des betreffenden Bettwäschestücks, ermittelt, vorzugsweise errechnet. Dementsprechend wird dann das von den Beladeklammern 27 an Spreizklammern einer Spreizeinrichtung übergebene Wäschestück 10 durch entsprechendes Auseinanderfahren der Spreizklammern ausgebreitet durch Strecken bzw. Spreizen des vorderen Rands des Wäschestücks 10. Das ausgebreitete Wäschestück wird dann vom Förderer 30 der Eingabemaschine 18 der Mangel 17 zugeführt, insbesondere in dieselbe eingegeben.

Infolge der unsortiert in die Mangel 17 eingegebenen Wäschestücke 10, insbesondere Bettwäschestücke, erfolgt das Mangeln mit einer unveränderten Mangeltemperatur, bei der es sich um eine reduzierte Mangeltemperatur handelt, die empfindliche Wäschestücke 10 nicht beeinträchtigt. Beispielsweise ist bei Bettwäschestücken die Mangeltemperatur an die einlagigen Bettlaken angepasst. Da aber zweilagige Bettbezüge und Kopfkissenbezüge mehr Feuchtigkeit enthalten, könnten sie mit einer höheren Mangeltemperatur gemangelt werden. Weil das wegen der unsortierten aufeinanderfolgenden empfindlichen (einlagigen) und weniger empfindlichen (doppellagigen) Wäschestücke 10 nicht möglich ist, werden weniger empfindliche, insbesondere doppellagige, Wäschestücke 10 länger gemangelt durch vorzugsweise eine vergrößerten Plättweg der Mangel 17. Wenn der Plättweg ausreichend vergrößert ist, kann nicht nur die verringerte Mangeltemperatur unverändert bleiben, sondern auch die Mangelgeschwindigkeit. Es ist aber auch denkbar, statt der Vergrößerung des Plättwegs die Mangelgeschwindigkeit bei unempfindlichen, insbesondere doppellagigen, Wäschestücken 10 zu verringern.

Die gemangelten Wäschestücke 10 verlassen die Mangel 17 über den Förderer 32, der die gemangelten Wäschestücke 10 der Faltmaschine 19 zuführt bzw. die Wäschestücke in die Faltmaschine 19 eingibt.

Zwischen der Mangel 17 und der Faltmaschine 19 befindet sich wenigstens eine weitere bildgebende Einrichtung 31, bei der es sich beispielsweise um eine Farbkamera, insbesondere Farben erfassende Digitalkamera, handelt. Mittels dieser bildgebenden Einrichtung 31 erfolgt vor der Faltmaschine 19 eine Identifikation jedes einzelnen gemangelten Wäschestücks 10. Dabei werden nicht nur die Art des Wäschestücks 10, also Bettbezug, Bettlaken oder Kopfkissenbezug, erkannt, sondern auch die Größe, vor allem auch Länge und Breite, aber auch die Farbe und die Gewebeart. Daraus ergeben sich Falt- und Abstapelparameter des jeweiligen Wäschestücks 10. Vorzugsweise wird auch der Kunde, an den das behandelte Wäschestück 10, insbesondere Bettwäschestück, auszuliefern ist, von der bildgebenden Einrichtung 31 ermittelt.

Nachdem die Wäschestücke 10, insbesondere Bettbezüge, Bettlaken und Kopfkissenbezüge, von mindestens einer bildgebenden Einrichtung 28 und/oder 31 und/oder Scanner bzw. Datenleser identifiziert und dadurch auch Faltkriterien, Sortierkriterien und gegebenenfalls auch der Kunde bzw. Empfänger der behandelten Wäschestück 10 ermittelt worden sind, wird jedes der unsortiert aufeinanderfolgenden Wäschestücke 10 anhand der Faltkriterien in der Faltmaschine 19 individuell gefaltet. Beispielsweise werden bei Bettwäsche, Bettbezügen, Bettlaken und Kopfkissenbezüge individuell gefaltet.

Nachdem die Wäschestücke 10 von der mindestens einen Faltmaschine 19 gefaltet worden sind, werden sie sortiert und abgestapelt, vorzugsweise sortiert vom betreffenden Abstapler 21 bzw. 35 abgestapelt. Bei Bettwäsche erfolgt die Sortierung nach Bettbezügen, Bettlaken und Kopfkissenbezügen und gegebenenfalls auch noch nach Kunden bzw. Empfängern. Die Sortierung erfolgt im einzigen oder jeweiligen Sortierstapler 20 bzw. 34, dem die mehreren Abstapler 21 bzw. 35 für unterschiedliche Sortierkriterien zugeordnet sind, insbesondere Bettbezüge auf mindestens einen dafür vorgesehen Abstapler 21 bzw. 35 abgestapelt werden sowie Bettlaken und Kopfkissenbezüge jeweils auf mindestens einen anderen Abstapler 21 bzw. 35 für Bettlaken oder Kopfkissenbezüge. Wenn zusätzlich die Sortierung nach Kunden oder Empfängern des jeweiligen Wäschestücks 10 erfolgt, können für die verschiedenen Arten von Wäschestücken 10, beispielsweise Bettbezüge, Bettlaken und Kopfkissenbezüge, jeweils mehrere Abstapler 21, 35 vorgesehen sein, wobei dann vom gleichen Abstapler 21, 35 nicht nur ein nach Art der Wäschestücke 10, beispielsweise Kopfkissenbezüge, Bettbezüge oder Bettlaken, sortiertes Abstapeln erfolgt, sondern auch nach Kunden bzw. Empfängern der behandelten Wäschestücke 10. Beispielsweise bildet dann ein Abstapler 21, 35 sortierte Stapel von Bettbezügen des gleichen Kunden bzw. Empfängers.

Falls der Wäscherei mit der zu mangelnden Wäsche auch nicht zu mangelnde Wäschestück 10, beispielsweise sogenannte Trockenwäsche bzw. Frotteewäsche, angeliefert worden sind, werden diese am Sortierstand 12 von den zu mangelnden Wäschestücken 10, insbesondere Bettwäsche, getrennt und dadurch eine Vorsortierung vorgenommen. Die Trockenwäsche wird auf einer anderen, nicht gezeigten Behandlungsstraße, beispielsweise parallel zu der in der Fig. 1 dargestellten Behandlungsstraße behandelt. Diese behandelten ungemangelten Trockenwäschestücke können im Bereich des Förderers 32 zwischen der Mangel 17 und der Faltmaschine 19 mit den gemangelten Wäschestücken 10 zusammengeführt und von der mindestens einen gleichen bildgebenden Einrichtung 31 oder einem Datenleser identifiziert und anschließend gemeinsam gefaltet werden. Danach werden im wenigstens einen Sortierstapler 20 bzw. 34 nicht nur die gemangelten Wäschestücke 10, sondern auch die nicht zu mangelnden Wäschestücke 10 sortiert und auf jeweils dafür vorgesehenen getrennten Abstaplern 21 sortenrein und gegebenenfalls kundenbezogen abgestapelt.

Denkbar ist es aber auch, nicht zu mangelnde Wäschestücke 10 wie beispielsweise Trockenwäsche bzw. Frotteewäsche von einer separaten Faltmaschine zu falten, so dass neben der Faltmaschine 19 für gemangelte Wäschestücke 10 mindestens eine weitere Faltmaschine für zum Beispiel Frotteewäsche vorhanden ist. Dann kann es aber vorgesehen sein, die von den unterschiedlichen Faltmaschinen gefalteten Wäschestücke 10 verschiedener Art wenigstens einer gemeinsamen Stapelstation, beispielsweise den Sortierstapler 20 bzw. 34, zuzuführen, der alle Wäschestücke 10 sortiert und sortenrein abstapelt. Jeder Abstapler 21 bzw. 35 stapelt dann Wäschestücke 10 gleicher Art gegebenenfalls für denselben Kunden ab, wobei gegebenenfalls für bestimmte Sorten Wäschestücke 10 und/oder Kunden mehrere Abstapler 21, 35 zum Abstapeln von Wäschestücke 10 gleicher Stapel bzw. Sortierkriterien vorgesehen sein können.

Das erfindungsgemäße Verfahren lässt sich nicht nur beispielshaft mit der in der Fig. 1 schematisch gezeigten Behandlungsstraße durchführen, sondern auch mit anderen Behandlungsstraßen, die es ermöglichen, Wäschestücke 10 zumindest größtenteils unsortiert zu behandeln und erst nach der Behandlung, insbesondere nach dem Falten, zu sortieren, so dass behandelte Wäschestücke 10 gleicher Sorte und gegebenenfalls für den gleichen Kunden auf jeweils mindestens einem gleichen Stapel in der mindestens einen Sortier- und/oder Stapelstation abgestapelt werden.

### Bezugszeichenliste:

- 10: Wäschestück
- 11: Behandlungsrichtung
- 12: Sortierstand
- 13: Sackförderanlage
- 14: Waschmaschine
- 15: Entwässerungseinrichtung
- 16: Trockner
- 17: Mangel
- 18: Eingabemaschine
- 19: Faltmaschine
- 20: Sortierstapler
- 21: Abstapler
- 23: Verteilförderer
- 24: Sammelförderer
- 25: Beladestation
- 26: Beladeklammerpaar
- 27: Beladeklammer
- 28: bildgebende Einrichtung
- 29: Mangelwalze
- 30: Förderer
- 31: bildgebende Einrichtung
- 32: Förderer
- 33: Förderer
- 34: Sortierstapler
- 35: Abstapler

## Patentansprüche

1. Verfahren zur Behandlung von Wäschestücken (10), wobei die Wäschestücke (10) wenigstens gewaschen, getrocknet, gemangelt, gefaltet und abgestapelt werden, wobei zu mangelnde Wäschestücke (10) unsortiert wenigstens gewaschen, getrocknet, gemangelt und gefaltet werden, **dadurch gekennzeichnet, dass** vor dem Mangeln und/oder Falten eine Identifikation der einzelnen Wäschestücke (10) erfolgt, die Wäschestücke (10) identifiziert werden durch berührungsloses Auslesen von Datenträgern der Wäschestücke und/oder die Ermittlung der Art, Größe, Farbe, des Musters und/oder der Gewebeart jedes einzelnen Wäschestücks (10) mittels mindestens einer bildgebenden Einrichtung, alle Wäschestücke (10) vor dem Falten mindestens hinsichtlich ihrer Falt- und Abstapelkriterien und/oder Empfänger identifiziert werden, jedes Wäschestück dem individuellen Faltkriterium entsprechend gefaltet und anschließend Wäschestücke (10) gleicher Abstapelkriterien auf mindestens einem Stapel für Wäschestücke (10) gleicher Stapelkriterien sortiert abgestapelt werden.

2. Verfahren nach Anspruch 1, **dadurch gekennzeichnet, dass** zu mangelnde Flachwäschestücke, wie insbesondere Bettwäschestücke und Tischwäschestücke, unsortiert wenigstens gewaschen, getrocknet, gemangelt und gefaltet werden.

3. Verfahren nach Anspruch 1 oder 2, **dadurch gekennzeichnet, dass** die Identifikation der einzelnen Wäschestücke (10) durch eine Ermittlung der Art und/oder Größe, des Faltkriteriums, des Sortier- und/oder Abstapelkriteriums jedes einzelnen Wäschestücks (10) erfolgt, vorzugsweise berührungslos.

4. Verfahren nach einem der vorhergehenden Ansprüche, **dadurch gekennzeichnet, dass** alle Wäschestücke (10) mit unveränderter Mangeltemperatur gemangelt werden, wobei die Mangeltemperatur so gewählt, vorzugsweise so verringert ist, dass sie die maximal zulässige Mangeltemperatur der empfindlichsten Wäschestücke (10) nicht übersteigt und der Plättweg und/oder die Mangelgeschwindigkeit derart sind, dass schwer zu mangelnde bzw. unempfindliche Wäschestücke beim Mangeln ausreichend endgetrocknet werden.

5. Verfahren nach einem der vorhergehenden Ansprüche, **dadurch gekennzeichnet, dass** gemangelte Wäschestücke (10) anhand der vor dem Mangeln und/oder vor dem Falten erfolgenden Ermittlung der Faltkriterien, Sortier- und/oder Abstapelkriterien gemäß den Faltkriterien gefaltet und jedes gefaltete Wäschestück (10) gezielt nach ihrem jeweiligen Sortier- und/oder Abstapelkriterium sortiert auf wenigstens einem Stapel für Wäschestücke (10) gleichen Abstapelkriteriums, insbesondere gleicher Art oder Sorte, abgestapelt werden.

6. Verfahren nach einem der vorhergehenden Ansprüche, **dadurch gekennzeichnet, dass** die Wäschestücke (10) vor dem Waschen vorsortiert werden, ob sie gemangelt oder nicht gemangelt zu werden brauchen, vorzugsweise vor dem Waschen eine Aussortierung solcher Wäschestücke (10) erfolgt, die nicht gemangelt werden müssen.

7. Verfahren nach einem der vorhergehenden Ansprüche, **dadurch gekennzeichnet, dass** vor dem Falten unterschiedliche gemangelte Wäschestücke (10) mit nicht zu mangelnden Wäschestücken (10) vorzugsweise in beliebiger Reihenfolge zusammengeführt werden und sowohl gemangelte als auch nicht zu mangelnde Wäschestücke (10) zusammen in beliebiger Reihenfolge gefaltet danach sortiert abgestapelt werden.

8. Verfahren nach einem der vorhergehenden Ansprüche, **dadurch gekennzeichnet, dass** einer gleichen Faltmaschine (19) mehrere Abstapler (21) zugeordnet werden, wobei jeweils mindestens einem Abstapler (21) wenigstens ein Sortier- und/oder Stapelkriterium zugeordnet ist zum Abstapeln behandelter und gefalteter Wäschestücke (10) vorzugsweise gleichen Empfängers mit gleichem Sortier- und/oder Stapelkriterium auf denselben Abstapler (21) oder einem von mehreren für das gleiche Sortier- und/oder Stapelkriterium vorgesehenen Abstapler (21).

9. Verfahren nach einem der vorhergehenden Ansprüche, **dadurch gekennzeichnet, dass** vor dem Mangeln mindestens die Länge eines vorderen Rands des jeweiligen Wäschestücks (10) ermittelt wird, wobei vorzugsweise vorher ein Abstand der den vorderen Rand des Wäschestücks begrenzenden Ecken so weit vergrößert wird, dass sich ein Durchhang des vorderen Rands einstellt, der auch bei großen Wäschestücken die Ermittlung der tiefsten Stelle des Durchhangs des vorderen Rands zur Bestimmung der Länge des vorderen Rands zulässt.

## Claims

1. Method for treating laundry items (10), wherein the laundry items (10) are at least washed, dried, mangled, folded and stacked, wherein laundry items (10) to be mangled are at least washed, dried, mangled and folded unsorted, **characterized in that** before mangling and/or folding, an identification is made of the individual laundry items (10), the laundry items (10) are identified by contactless read-out of data carriers of the laundry items and/or the determination of the type, size, colour, pattern and/or weave style of each individual laundry item (10) by means of at least one imaging device, all laundry items (10) are identified at least with regard to their folding and stacking criteria and/or recipients before folding, each laundry item is folded according to the individual folding criterion, and then laundry items (10) with the same stacking criteria are sorted and stacked on at least one stack for laundry items (10) with the same stacking criteria.

2. Method according to Claim 1, **characterized in that** flat laundry items to be mangled, such as in particular items of bed linen and table linen, are at least washed, dried, mangled and folded unsorted.

3. Method according to Claim 1 or 2, **characterized in that** the identification of the individual laundry items (10) is made by determining the type and/or size, folding criterion, sorting and/or stacking criterion of each individual laundry item (10), preferably in a contactless manner.

4. Method according to any one of the preceding claims, **characterized in that** all laundry items (10) are mangled at unchanged mangling temperature, wherein the mangling temperature is selected, preferably lowered, such that it does not exceed the maximum permitted mangling temperature of the most delicate laundry items (10) and the flattening path and/or the mangling speed are such that laundry items which are difficult to mangle or not delicate are finally dried sufficiently during mangling.

5. Method according to any one of the preceding claims, **characterized in that** mangled laundry items (10), based on the determination of the folding criteria, sorting and/or stacking criteria performed before mangling and/or before folding, are folded in accordance with the folding criteria and each folded laundry item 10) is sorted in targeted fashion according to their respective sorting and/or stacking criterion, and stacked on at least one stack for laundry items (10) with the same stacking criterion, in particular of the same type or sort.

6. Method according to any one of the preceding claims, **characterized in that** the laundry items (10) are pre-sorted before washing according to whether or not they need to be mangled, preferably with laundry items (10) that do not need to be mangled being set aside before washing.

7. Method according to any one of the preceding claims, **characterized in that** before folding, different mangled laundry items (10) are brought together with laundry items (10) not to be mangled, preferably in any order, and both mangled laundry items (10) and those not to be mangled are folded and then sorted and stacked together in any order.

8. Method according to any one of the preceding claims, **characterized in that** several stackers (21) are assigned to a same folding machine (19), wherein at least one sorting and/or stacking criterion is assigned to each at least one stacker (21) for stacking treated and folded laundry items (10), preferably for the same recipient, with the same sorting and/or stacking criterion on the same stacker (21) or on one of several stackers (21) provided for the same sorting and/or stacking criterion.

9. Method according to any one of the preceding claims, **characterized in that** before mangling, at least the length of a front edge of the respective laundry item (10) is determined, wherein preferably a distance between the corners delimiting the front edge of the laundry items (10) previously being increased so far that a sag of the front edge occurs, which even on large laundry items allows determination of the lowest point of the sag of the front edge for determining the length of the front edge.

## Revendications

1. Procédé de traitement d'articles de linge (10), les articles de linge (10) étant au moins lavés, séchés, repassés, pliés et empilés, les articles de linge (10) à repasser étant au moins lavés, séchés, repassés et pliés sans tri, **caractérisé en ce que** les différents articles de linge (10) sont identifiés avant le repassage et/ou le pliage, les articles de linge (10) étant identifiés par lecture sans contact de supports de données des articles de linge et/ou par détermination du type, de la taille, de la couleur, du modèle et/ou du type de tissu de chaque article de linge individuel (10) au moyen d'au moins un dispositif d'imagerie, tous les articles de linge (10) étant identifiés avant pliage au moins en fonction de leurs critères de pliage et d'empilage et/ou de leur destinataire, chaque article de linge étant plié de façon appropriée selon le critère de pliage individuel, puis les articles de linge (10) de mêmes critères d'empilement étant triés et empilés sur au moins une pile d'articles de linge (10) de mêmes critères d'empilage.

2. Procédé selon la revendication 1, **caractérisé en ce que** les articles de linge plats à repasser, tels que notamment les articles de linge de lit et de table, sont au moins lavés, séchés, repassés et pliés sans tri.

3. Procédé selon la revendication 1 ou 2, **caractérisé en ce que** l'identification des articles individuels de linge (10) est effectuée par détermination du type et/ou de la taille, du critère de pliage, du critère de tri et/ou d'empilage de chaque article de linge individuel (10), de préférence sans contact.

4. Procédé selon l'une des revendications précédentes, **caractérisé en ce que** tous les articles de linge (10) sont repassés à une température de repassage inchangée, la température de repassage étant choisie, de préférence réduite, de manière à ne pas dépasser la température de repassage maximale admissible des articles de linge les plus sensibles (10) et le chemin de repassage et/ou la vitesse de repassage étant tels que les articles de linge les plus difficiles à repasser ou insensibles sont suffisamment secs pendant le repassage.

5. Procédé selon l'une des revendications précédentes, **caractérisé en ce que** les articles de linge repassés (10) sont pliés sur la base de la détermination, avant le repassage et/ou avant pliage, des critères de pliage, des critères de tri et/ou d'empilage selon des critères de pliage et chaque article de linge plié (10) est spécifiquement trié selon ses critères de tri et/ou d'empilage respectifs sur au moins une pile d'articles de linge (10) de même critère d'empilage, notamment de même type ou catégorie.

6. Procédé selon l'une des revendications précédentes, **caractérisé en ce que** les articles de linge (10) sont pré-triés avant lavage afin de déterminer s'ils doivent être repassés ou non, de préférence les articles de linge (10) qui ne doivent pas être repassés sont triés avant lavage.

7. Procédé selon l'une des revendications précédentes, **caractérisé en ce qu'**avant pliage, les différents articles de linge repassés (10) sont amenés avec les articles de linge (10) qui ne sont pas à repasser, de préférence dans un ordre quelconque et les articles de linge (10) qui sont à repasser et ceux qui ne sont pas à repasser sont pliés ensemble dans un ordre quelconque puis triés et empilés.

8. Procédé selon l'une des revendications précédentes, **caractérisé en ce que** plusieurs empileurs (21) sont associés à une même plieuse (19), au moins un critère de tri et/ou d'empilage étant associé à au moins un empileur (21) afin d'empiler des articles de linge traités et pliés (10), de préférence du même destinataire avec le même critère de tri et/ou d'empilage, sur le même empileur (21) ou un parmi plusieurs empileurs (21) prévus pour le même critère de tri et/ou d'empilage.

9. Procédé selon l'une des revendications précédentes, **caractérisé en ce qu'**au moins la longueur d'un bord avant de l'article de linge (10) respectif est déterminée avant le repassage, de préférence au préalable une distance entre les coins délimitant le bord avant de l'article de linge étant augmentée de façon à régler un affaissement du bord avant, ce qui permet de déterminer le point le plus bas de l'affaissement du bord avant afin de déterminer la longueur du bord avant, même avec de grands articles de linge.
